# EUROPÄISCHE PATENTSCHRIFT

(11) **EP 3 973 246 B1**
(45) Veröffentlichungstag und Bekanntmachung des Hinweises auf die Patenterteilung: **27.11.2024**
(21) Anmeldenummer: 20727622.1
(22) Anmeldetag: 20.05.2020
(51) Int. Cl.: F42D 3/00, B64C 39/02

(54) **VORRICHTUNG UND VERFAHREN ZUM SPRENGEN VON LAWINEN**
DEVICE AND METHOD FOR AVALANCHE BLASTING
DISPOSITIF ET PROCÉDÉ DE DÉCLENCHEMENT PAR DÉTONATION D'AVALANCHES

(30) Priorität: 21.05.2019 AT 601282019; 30.01.2020 AT 500762020
(43) Veröffentlichungstag der Anmeldung: 30.03.2022
(73) Patentinhaber: Knab, Philipp, 5621 St. Veit im Pongau (AT)
(72) Erfinder: Knab, Philipp, 5621 St. Veit im Pongau (AT)
(74) Vertreter: HGF
(86) Internationale Anmeldenummer: PCT/EP2020/064155
(87) Internationale Veröffentlichungsnummer: WO 2020/234400

(56) Entgegenhaltungen:
- EP-B1- 2 977 318
- WO-A1-80/01511
- DE-C1- 4 302 252
- FR-A1- 2 964 732

## Beschreibung

Die Erfindung betrifft eine Vorrichtung und ein Verfahren zum Sprengen von Lawinen.

Schneelawinen stellen eine Gefahr für Personen dar, welche sich im Bereich eines potenziellen Lawinenkegels befinden. Zudem zerstören Lawinen Infrastruktureinrichtungen, wie zum Beispiel Strommasten oder Straßen oder blockieren diese für längere Zeit.

Um die Gefahr von solchen Schneelawinen, welche im Folgenden lediglich als Lawinen bezeichnet werden, zu begrenzen, ist es bekannt, Lawinen kontrolliert mittels einer Sprengung auszulösen. Hierdurch kann einerseits sichergestellt werden, dass sich beim Lawinenabgang keine Personen im Bereich der Lawine befinden und verletzt werden. Weiterhin kann bei dem frühzeitig ausgelösten Lawinenabgang sichergestellt werden, dass das Zerstörungspotenzial der Lawine nur so gering ist, dass Infrastruktureinrichtungen nicht beschädigt werden. Würde man beispielsweise bei einem andauernden Schneefall abwarten, dann würde die potenzielle Schneemenge, welche von einer Lawine mitgerissen werden kann, zunehmen, so dass nicht gewollte Zerstörungen erfolgen.

Es gibt unterschiedliche Vorrichtungen und Verfahren zum Sprengen von Lawinen.

An Stellen, an welchen häufig Lawinen gesprengt werden müssen, gibt es fest installierte Vorrichtungen, wie zum Beispiel Sprengseilbahnen, Sprengmasten oder Sprengrohre.

Eine Sprengseilbahn umfasst ein Seil, welches im Bereich oberhalb einer Sprengstelle fest installiert ist. Auf dem Seil ist ein Schlitten verfahrbar angeordnet. An dem Schlitten hängt mit einer Schnur eine Sprengladung. Die Sprengladung ist mit einem Zünder versehen, welcher nach einer vorbestimmten Zeit nach der Aktivstellung selbsttätig zündet.

Der Schlitten wird mit dem Sprengsatz in dem Bereich über den Sprengungsort bewegt, wo die Sprengladung zündet und die Lawine auslöst.

Die Sprengrohre sind so ausgebildet, dass sie mit einer Öffnung oberhalb der Schneedecke münden, wobei die Öffnung des Rohres etwas nach unten geneigt ist. Die gasförmige Sprengladung wird ferngesteuert im Rohr gezündet, so dass ein heißer Gasstrom gezielt auf die Schneedecke trifft und eine Lawine auslöst.

Bei Verwendung von Sprengrohren besteht der Nachteil, dass der heiße Gasstrom den Schnee im lokalen Umfeld zum Schmelzen bringt. Die aufgeschmolzene Schneedecke friert und verhärtet wieder. Dies ist insbesondere der Fall, wenn die Sprengung keine Lawine auslöst. Durch das wiederholte Sprengen kann eine Eisplatte erzeugt werden, die sehr stabil ist. Hierdurch kann das weitere Sprengen von Lawinen unwirksam werden, da der Gasstrom keine weitere Lawine auslösen kann, obwohl in unmittelbarer Nachbarschaft sehr wohl instabile Schneebereiche vorhanden sind.

Bei einem Sprengmasten kann eine Sprengung über Funk ausgelöst werden.

Weiterhin ist es bekannt, mit einem Hubschrauber Sprengsätze abzuwerfen, welche in der Schneedecke liegend explodieren und so eine Lawine auslösen.

Diese unterschiedlichen Verfahren haben unterschiedliche Vor- und Nachteile.

Sprengseilbahnen, Sprengmasten und Sprengrohre machen nur dann Sinn, wenn an bestimmten Stellen regelmäßig Lawinen gesprengt werden müssen. Dies ist beispielsweise bei Skigebieten der Fall, um sicherzustellen, dass keine Skiabfahrten verschüttet werden. Je nach Wetterlage und insbesondere nach der beim Schneefall vorherrschenden Windrichtung kann an unterschiedlichen Hängen Lawinengefahr bestehen. Es ist praktisch nicht möglich, alle Hänge mit einer Sprengvorrichtung zu versehen.

Wird die Sprengladung aus einem Hubschrauber abgeworfen, dann kann eine solche Lawinensprengung wesentlich individueller auf die aktuelle Lawinensituation eingestellt werden. Besteht eine Lawinengefahr, beispielsweise nur an Südhängen, dann werden nur an Südhängen Lawinen ausgelöst.

Das Abwerfen von Sprengsätzen aus einem Hubschrauber birgt jedoch auch Nachteile. Bei harter Schneedecke kann der Sprengsatz abrutschen und an einer völlig anderen Stelle detonieren. Hierbei ist zu berücksichtigen, dass nach den gesetzlichen Vorschriften der Sprengsatz erst zwei Minuten nach Abwurf aus dem Hubschrauber zünden darf. Der Hubschrauber muss ausreichend Gelegenheit haben, sich vom Ort der Sprengung zu entfernen. Bei einer harten Schneedecke kann es passieren, dass die Sprengladung bereites einen großen Teil in Richtung Tal abgerutscht ist, bevor sie explodiert ist.

Weiterhin kann ein einmal aus dem Hubschrauber abgeworfener und aktivierter Sprengsatz nicht mehr entschärft werden.

Ein weiteres großes Problem beim Sprengen von Lawinen mittels Hubschrauber sind Fehlzündungen. Die Sprengung muss von einem Sprengmeister vorgenommen werden. Der Sprengmeister ist verantwortlich, dass nicht gezündete Sprengsätze wieder entfernt werden. Liegt ein nicht gezündeter Sprengsatz in einem potenziellen Lawinenhang, dann besteht beim Bergen die Gefahr, selbst von einer Lawine erfasst zu werden.

Das größte Problem liegt jedoch darin, dass man bei Schlechtwetter einen Sprengungsort nicht anfliegen kann. Dies ist insbesondere kritisch, wenn eine langanhaltende Schlechtwetterperiode von z.B. zwei bis drei Wochen vorliegt mit großen Niederschlagsmengen. Hierbei kann es sogar passieren, dass Sprengvorrichtungen vollständig eingeschneit sind, so dass sie nicht mehr benutzt werden können. Solche Wetterlagen sind jedoch diejenigen, welche Lawinen mit einem großen Zerstörungspotenzial auch an Orten, an welchen oftmals keine Lawinengefahr besteht, verursachen können. An solchen Orten sind meistens keine fest installierten Lawinensprengvorrichtungen, wie zum Beispiel eine Sprengseilbahn oder ein Sprengrohr, vorgesehen, da man hier nicht mit dem Abgang einer Lawine rechnet. Jedoch können solche Lawinen Straßen verschütten, Strommasten kippen oder sogar Häuser erfassen.

Ein weiterer Nachteil besteht darin, dass eine aus dem Hubschrauber abgeworfene Sprengladung im Schnee explodiert und dabei die Druckwelle durch die Schneedecke erheblich gedämpft wird. Es ist wesentlich effizienter, wenn der Sprengsatz ein Stück oberhalb der Schneedecke zündet, wie es bei einer Sprengseilbahn oder einem Sprengmasten der Fall ist. Mit einer Sprengseilbahn kann jedoch nicht flexibel ein beliebiger Ort angefahren werden. Zudem ist es manchmal schwierig, die Bewegung des Schlittens der Sprengseilbahn und den Zeitpunkt der Zündung der Sprengladung korrekt zu koordinieren. Es besteht daher ein erheblicher Bedarf, eine Vorrichtung und ein Verfahren zum Sprengen von Lawinen zu schaffen, mit welchen an unterschiedlichen Orten Lawinen auch während anhaltend schlechtem Wetter ausgelöst werden können.

Aus dem Europäischen Patent 2 977 318 B1 geht die Verwendung einer Drohne hervor, um eine Sprengladung zum Auslösen einer künstlichen Lawinenablösung zu transportieren, wobei die Sprengladung mittels eines Kabels außerhalb des Fluggerätes angeordnet ist. Das Fluggerät umfasst eine Auslösevorrichtung, welche einen elektrischen Strom erzeugt, der entlang dem Kabel fließt, um die Sprengladung zu zünden. Die Auslösevorrichtung kann unmittelbar an der Drohne oder auch direkt an der Sprengladung angeordnet sein. Als Sprengmaterial wird ein pyrotechnisches Sprengmaterial verwendet.

Aus der US 2014/0353422 A1 geht die Verwendung einer Drohne hervor, um explosive Vorrichtungen an vorbestimmten Stellen abzuwerfen. Dies wird dazu verwendet, um schwer zugängliche Wege freizusprengen oder im Gebirge Schneehügel wegzusprengen.

Weitere Sprenggeräte zum Sprengen von Lawinen gehen beispielsweise aus der WO 80/01511 A1, FR 2 964 732 A1 und der US 2011/0139029 A1 hervor.

Der Erfindung liegt die Aufgabe zugrunde, eine Vorrichtung mit einer Drohne und ein Verfahren zum Sprengen von Lawinen so weiterzubilden, dass labile Schneemassen zuverlässig, wetterunabhängig und an unterschiedlichen Orten ausgelöst werden können und zudem eine höchstmögliche Sicherheit für die Anwender gewährleistet ist.

Die Aufgabe wird durch die Gegenstände der unabhängigen Patentansprüche gelöst. Vorteilhafte Ausgestaltungen sind in den jeweiligen Unteransprüchen angegeben.

Gemäß der Erfindung umfasst die Vorrichtung zum Sprengen von Lawinen eine Drohne, einen Sprengsatz, welcher mittels einer Schnur freihängend an der Drohne befestigt ist, und einen Zündmechanismus zum Zünden des Sprengsatzes, wobei der Zündmechanismus ferngesteuert oder automatisch auslösbar ausgebildet ist.

Diese Vorrichtung zeichnet sich dadurch aus, dass der Zündmechanismus an der Schnur mit Abstand zur Drohne und mit Abstand zum Sprengsatz so angeordnet ist, dass der Zündmechanismus einerseits nicht durch elektrische Elemente der Drohne fehlgezündet werden kann und andererseits nicht bei einer Sprengung des Sprengsatzes beschädigt wird. Hierdurch wird eine erhebliche Gefahrenquelle für Fehlauslösungen eliminiert. Dies ist besonders vorteilhaft, da ein Sprengsatz und kein pyrotechnisches Sprengmittel, das eine erheblich geringere Sprengwirkung besitzt, verwendet wird. Sprengstoffe im Sinne der vorliegenden Erfindung sind Explosivstoffe der Gefahrgutklasse 1.1 D, d.h. detonierende explosive Stoffe oder Schwarzpulver, die massenexplosionsfähig sind (eine Massenexplosion ist eine Explosion, die nahezu die gesamte Ladung praktisch gleichzeitig erfasst).

Der Zündmechanismus ist an der Schnur befestigt. Der Zündmechanismus kann mit einem dünnen Zündkabel mit dem Sprengsatz verbunden sein.

Mit der Drohne kann der Sprengsatz an eine beliebige Stelle im Gebirge geflogen werden, so dass der Ort der Auslösung einer Lawine frei gewählt werden kann. Da der Sprengsatz mit einer Schnur im sicheren Abstand zur Drohne befestigt ist, kann der Sprengsatz gezündet werden, wenn er sich noch frei hängend an der Drohne befindet. Es ist nicht notwendig, dass der Sprengsatz abgeworfen wird. Hierdurch ist es möglich, den Sprengsatz ein Stück oberhalb der Schneedecke zu zünden, was wesentlich effizienter ist, als den Sprengsatz abzuwerfen. Durch das ferngesteuerte oder automatische Auslösen des Zündmechanismus kann sich der Bediener der Vorrichtung, der in der Regel ein Sprengmeister ist, außerhalb jeglichen Gefahrenbereiches aufhalten.

Die Drohne kann auch bei schlechtem Wetter geflogen werden. Zum einen kann die Drohne einfach mit einem Kraftfahrzeug in die Nähe des Einsatzbereiches verbracht werden, so dass grundsätzlich keine langen Flüge durchzuführen sind, sondern mit einem relativ kurzen Flug der Einsatz- bzw. Zielort erreichbar ist. Dies ist bei schlechtem Wetter wesentlich einfacher auszuführen, als mit einem Hubschrauber. Zum anderen besteht bei einem Absturz der Drohne nicht die Gefahr, dass Menschen zu Schaden kommen. Daher kann mit einem Drohnenflug ein wesentlich höheres Flugrisiko im Vergleich zu einem Hubschrauberflug in Kauf genommen werden. Besteht die Gefahr von Infrastrukturschäden, dann sind die Kosten für eine Drohne, die in der Regel einige Zehntausend Euro betragen, vergleichsweise gering zu den Kosten, welche durch die Lawinenschäden verursacht werden können.

Der Abstand zwischen der Drohne und dem Zündmechanismus beträgt zumindest 5 m und vorzugsweise zumindest 10 m beträgt.

Der Abstand zwischen dem Zündmechanismus und dem Sprengsatz beträgt zumindest 5 m, insbesondere zumindest 10 m und vorzugsweise zumindest 15 m beträgt.

Die Schnur ist zumindest 10 m oder zumindest 20 m, vorzugsweise zumindest 30 m und insbesondere zumindest 35 m bzw. zumindest 40 m lang, wobei ein Ende der Schnur an der Drohne befestigt ist und das andere Ende der Schnur mit dem Sprengsatz verbunden ist. Die Länge der Schnur zwischen Drohne und Sprengladung ist entsprechend der Sprengwirkung des Sprengsatzes zu bemessen. Je größer die Sprengwirkung des Sprengsatzes ist, desto länger ist die Schnur auszubilden, damit die Drohne bei der Sprengung des Sprengsatzes nicht zu Schaden kommt. Es kann daher auch durchaus zweckmäßig sein, die Schnur mit einer Länge von zumindest 30 m und insbesondere zumindest 50 m vorzusehen.

Die Schnur weist einen Sprengabschnitt auf, welcher unmittelbar mit dem Sprengsatz verbunden ist und mit der übrigen Schnur mittels einer lösbaren Klemme verbunden ist.

Hierdurch ist es möglich, dass nach dem Sprengen eines Sprengsatzes die Drohne zum Befestigen eines weiteren Sprengsatzes nicht landen muss, sondern lediglich so weit absenkt, dass die Klemme von einem Benutzer betätigt werden kann, um den nach der letzten Sprengung übergebliebenen Teil des Sprengabschnittes zu lösen und einen neuen Sprengabschnitt mit einem neuen Sprengsatz anzuklemmen. Hierdurch kann eine sehr schnelle Bestückung der Drohne mit einem weiteren Sprengsatz erfolgen. Es können damit mehrere Sprengungen in kurzer Zeit erledigt werden.

Der Sprengabschnitt weist eine Länge auf, sodass die lösbare Klemme ausreichend vom Sprengsatz entfernt ist, um bei der Sprengung nicht zerstört zu werden. Bei Versuchen mit üblichen Sprengsätzen hat sich gezeigt, dass der Sprengabschnitt in der Regel über eine Länge von etwa 1,5 bis 2 m zerstört wird. Daher ist es zweckmäßig, dass der Sprengabschnitt zumindest 2 m , bzw. zumindest 3 m, insbesondere zumindest 3,5 m lang ist. Wird ein elektrischer Zündmechanismus verwendet, dann enthält der Sprengabschnitt eine entsprechende elektrische Leitung und die Klemme ist zum Ausbilden einer elektrischen Verbindung zwischen den Sprengabschnitten und dem übrigen Bereich der Schnur, welcher zum Zündmechanismus führt, ausgebildet. Die Klemme kann vorzugsweise mittels eines Klick-Mechanismus gelöst und wieder fixiert werden, sodass ein schnelles Austauschen des Sprengabschnittes möglich ist.

Die Vorrichtung umfasst eine Einrichtung zum Detektieren, ob der Sprengsatz auf einem Untergrund aufsitzt und eine Höhenmesseinrichtung zum Messen der Höhe der Drohne.

Hierdurch kann festgestellt werden, wann der Sprengsatz auf einem Untergrund aufsitzt und in diesem Moment bzw. Zustand die Höhe der Drohne gemessen werden, so dass die Drohne um eine vorbestimmte Höhe angehoben und der Sprengsatz in der vorbestimmten Höhe über dem Untergrund gezündet werden kann.

Hierzu kann an sich eine beliebige Höhenmesseinrichtung verwendet werden. Vorzugsweise wird jedoch eine Höhenmesseinrichtung verwendet, welche mittels Funksignale die Höhe bzw. den Ort der Drohne in einem dreidimensionalen Koordinatensystem bestimmt. Eine solche Höhenmesseinrichtung kann die Höhe unabhängig vom Wetter bestimmen, was nicht für Höhenmesseinrichtungen gilt, die die Höhe mittels eines Laserstrahls bestimmen. Derartige Höhenmesseinrichtungen arbeiten bei Niederschlag und Nebel nicht zuverlässig.

Das Aufsetzen des Sprengsatzes auf dem Untergrund kann durch Überwachen einer Antriebsleistung, welche Motoren zum Antreiben von Rotoren der Drohne zugeführt wird, festgestellt werden. Sinkt die Antriebsleistung, wobei die Drohne ihre Höhe in etwa beibehält, dann bedeutet dies, dass die Last, welche mit der Drohne gehalten wird, sich verringert. Dies ist der Fall, wenn der Sprengsatz auf dem Untergrund aufsitzt. Es kann auch eine Waage vorgesehen sein, welche die Last misst, die an der Schnur der Drohne hängt. Verringert sich das an der Drohne hängende Gewicht, so kann dies als Aufsetzen des Sprengsatzes auf dem Untergrund ausgelegt werden. Die Waage muss nicht auf eine vorbestimmte Gewichtsskala kalibriert sein. Als Waage genügt ein einfacher Kraftsensor, mit welchem die auf die Schnur ausgeübte Kraft überwacht und vor allem Änderungen dieser Kraft bzw. des an der Schnur hängenden Gewichtes festgestellt werden können.

Ein kurzzeitiges Aufsetzen des Sprengsatzes auf dem Untergrund kann auch dazu verwendet werden, um ein Pendeln des Sprengsatzes an der Drohne zu unterbinden.

Die Vorrichtung weist vorzugsweise einen Ortungssensor auf. Der Ortungssensor ist insbesondere ein Funkortungssensor. Ein Funkortungssensor ist ein Ortungssensor, welcher mittels Funksignalen seinen Ort bestimmt. Hierbei werden vor allem zwei Klassen von Ortungssensoren unterschieden, Sattelitenortungssensoren und Ortungssensoren, welche Mobilfunksignale zur Ortung verwenden. Ein Satellitenortungssensor empfängt Funksignale von Satelliten, welche Ort- und Zeitinformationen enthalten. Anhand dieser Informationen kann der Ortungssensor seinen Ort in einem dreidimensionalen Raumkoordinatensystem berechnen. Solche Sattelitenortungssensoren sind zum Beispiel als GPS-Sensoren bekannt. Die mit Mobilfunksignalen arbeitenden Ortungssensoren berechnen mittels einer Triangulation der Mobilfunksignale ihren Ort. Mit einem dieser Ortungssensoren kann die Drohne selbsttätig ihren Ort erfassen.

Mit einem solchen Funkortungssensor kann die relative Höhe der Drohne auch bei schlechtem Wetter sehr präzise bestimmt werden. Nach dem oben erläuterten Aufsetzen des Sprengsatzes auf dem Untergrund kann die durch das Anheben erzielte Höhe des Sprengsatzes über dem Untergrund mit dem Funkortungssensor sehr präzise bestimmt werden.

Die Vorrichtung kann eine Steuereinrichtung aufweisen, mit welcher nach Maßgabe von mit dem Ortungssensor ermittelten Ortskoordinaten die Vorrichtung selbsttätig an einen bestimmten Ort fliegen kann. Hierdurch kann der Ort, den die Drohne anzufliegen hat, vorab in der Flugsteuereinrichtung gespeichert sein, so dass die Drohne diesen Ort selbstständig anfliegt, ohne dass eine Person den Flug der Drohne steuern muss. Bei Erreichen des Zielortes muss dann lediglich der Zündmechanismus zum Zünden des Sprengsatzes ausgelöst werden.

Der Zündmechanismus kann jedoch auch automatisch ausgelöst werden, zum Beispiel bei automatischem Feststellen, dass sich die Drohne und damit die gesamte Vorrichtung am gewünschten Zielort befindet.

Die Vorrichtung kann mit einer Kamera für sichtbares Licht und/oder einer Kamera für Infrarotstrahlung versehen sein. Diese Kameras sind mit ihrer Blickrichtung nach unten oder nach schräg unten gerichtet, so dass beim Flug der Drohne der Untergrund optisch abgetastet werden kann. Die Kamera zum Erfassen von Infrarotstrahlung, welche auch als Wärmebildkamera bezeichnet wird, dient zum Bestimmen, ob sich Lebewesen in dem Gebiet befinden, in welchem der Sprengsatz gezündet werden soll und/oder die Lawine abgehen soll.

Vorzugsweise ist eine Funkeinrichtung zum Übertragen von Sensorsignalen und/oder Kamerasignalen vorgesehen. Mit dieser Funkeinrichtung können beispielsweise die mittels des Ortungssensors erfassten Ortskoordinaten und/oder die mittels der Kamera erfassten Bildsignale und/oder mittels der Höhenmesseinrichtung Höhenwerte übertragen werden.

Bei der Übertragung von Ortskoordinaten kann ein Benutzer den Flug der Drohne anhand der empfangenen Ortskoordinaten steuern. Dies ist vor allem dann zweckmäßig, wenn keine Zielkoordinaten bekannt sind und der Zielort ferngesteuert angeflogen werden soll. Diese Daten können von einer Fernsteuerung und/oder einem Server empfangen werden.

Anhand der Bildsignale kann man vor einer Sprengung mit der Drohne den potentiellen Lawinenkegel abtasten, ob sich hierin Personen, Tiere oder Gegenstände befinden, die von der abgesprengten Lawine erfasst werden könnten. Dies ist insbesondere mittels Bildsignalen einer Wärmebildkamera (Kamera für Infrarotstrahlung) möglich, mit welcher Lebewesen gegenüber dem kalten Hintergrund einer Schneedecke mit hohem Kontrast sichtbar sind.

Die Schnur kann an der Drohne mittels einer Abwurfeinrichtung befestigt sein, welche ferngesteuert auslösbar ausgebildet ist. Sollte sich beispielsweise die Schnur an einem Baum verhängen, so kann sie von der Drohne gelöst werden wodurch diese nicht verloren geht. Vorzugsweise wird beim Abwerfen der Schnur und damit des Sprengsatzes der Ort der Vorrichtung erfasst, so dass später die Suche des Sprengsatzes wesentlich einfacher ist.

Durch das Übermitteln der Höhenwerte und der Ortskoordinaten an einem Server kann dieser die Dicke der Schneedecke bestimmen, indem die Höhenwerte über der Schneedecke mit gespeicherten Höhenwerten von einer Messung am selben Ort verglichen werden, zu einem Zeitpunkt, an dem kein Schnee vorhanden war. Hierdurch kann automatisch durch Erfassen mehrerer Höhenwerte und der entsprechenden Ortskoordinaten ein Profil der Schneedecke berechnet werden. Derartige Schneedeckenprofile können auch über vorbestimmte Zeitabstände von einigen Tagen oder Wochen regelmäßig erfasst werden und so kann ein Verlauf des Schneedeckenprofils erfasst werden. Aus diesen Daten lässt sich die Lawinengefahr abschätzen. Dies gilt insbesondere, wenn diese Daten mit entsprechenden Wetterdaten, insbesondere der Temperatur und des Windes beim jeweiligen Schneefall verknüpft werden. Hierdurch kann am Server eine sehr präzise Abschätzung der Lawinengefahr erfolgen, da die tatsächlichen Schneehöhen in die Abschätzung einfließen.

Das System kann derart ausgebildet sein, dass anhand dieser Abschätzung der Lawinengefahr ein optimaler Sprengort berechnet wird. Dieser optimale Sprengort kann an die Drohne übertragen werden, welche dann automatisch die Sprengung an diesem Ort ausführt. Dieses System stellt einen eigenständigen Gedanken dar, welcher auch bei anderen Arten von Lawinensprengungen mittels Drohnen genutzt werden kann, wie z.B. bei Lawinensprengungen, bei welchen ein Sprengsatz von der Drohne abgeworfen wird. Die Abschätzung der Lawinengefahr beruht auf einer großen Datenbasis, welche vorzugsweise ein Modell des Hanges umfasst, in dem die Kontur des Hanges modelliert ist. Weiterhin kann die Beschaffenheit der Hangoberfläche (z. B. Wiese, Gebüsch, Bäume, Felsen) in der Datenbasis enthalten sein. Die Datenbasis kann umfangreiche Wetterdaten enthalten, welche nicht nur das aktuelle Wetter, sondern auch das Wetter der letzten Tage bzw. der letzten Wochen beschreibt. Diese Datenbasis wird mit der aktuellen Messung der Schneehöhe verglichen, wobei die Schneehöhenmessung vorzugsweise ein Profil der Schneedecke über einem bestimmten Bereich erfasst, d.h., dass mehrere örtlich verteilte Messpunkte der Schneehöhe vorhanden sind. Diese Kombination aus einer großen Datenbasis und der aktuellen Messung der Schneehöhe bzw. der Dicke der Schneedecke erlaubt eine wesentlich präzisere Abschätzung der Lawinengefahr als bei herkömmlichen Systemen zum Abschätzen der lokalen Lawinengefahr, womit eine sehr präzise Bestimmung des Sprengortes und damit Steuerung der Drohne zum Sprengort möglich ist.

Bei der Bestimmung des Sprengortes kann auch eine Simulation des zu erwartenden Lawinenabgangs mit berücksichtigt werden. Ist die künstlich erzeugte Lawine z.B. zu groß und es besteht die Gefahr, dass Schäden verursacht werden, dann kann es zweckmäßig sein, die Lawine zunächst in einem tiefem Abschnitt des Hanges zu sprengen, sodass nur ein Teil der Schneelast abrutscht und mit einer zweiten Sprengung danach den oberen Abschnitt des Hanges zu sprengen.

Da aufgrund der unterschiedlichen Konturen der Hänge im Gebirge, der unterschiedlichen Wetterverhältnisse und der unterschiedlichen Schneeverhältnisse sich die Lawinengefahr zwischen einzelnen Orten erheblich unterscheiden kann, aber an den entsprechenden Orten wiederholt ähnliche Bedingungen vorliegen, kann dieses System vorzugsweise mit einem selbstlernenden Computersystem, wie z. B. einem neuronalen Netzwerk, ausgeführt sein, das mit der Zeit während eines Lernmodus die lokalen Gegebenheiten bezüglich der Lawinengefahr lernt. In einem solchen Lernmodus werden die entsprechenden Daten eingegeben, welche zum Bestimmen der Lawinengefahr vorgesehen sind, wie sie oben erläutert sind, und zusätzlich Daten, welche den Erfolg der Lawinenauslösung dokumentieren. Diese den Erfolg der Lawinenauslösung beschreibenden Daten können manuell vom Benutzer und/oder auch automatisch durch Abtasten des Lawinenabriss und/oder des Lawinenkegels mit einer Kamera erfasst werden.

Das Übertragen von Sensorsignalen und/oder Kamerasignalen dient auch der Dokumentation des Sprengerfolgs bzw. der Beweissicherung. Nach dem Sprengen der Lawine kann der Lawinenkegel von der Drohne abgeflogen werden und die entsprechenden Bilddaten erfasst, übertragen und aufgezeichnet werden. Selbst bei schlechten Sichtverhältnissen, bei welchen aus der Entfernung nicht erkennbar ist, ob und wie die Lawine abgegangen ist, können durch die Nähe zum Lawinenkegel, in der sich die Drohne befinden kann, aussagekräftige Informationen erfasst werden. Die Drohne kann mit einem Kollisionsschutz versehen sein, welcher mit einem Ultraschall- und/oder Radarsensor den Abstand zu einem Hindernis erfasst, welcher es auch bei schlechten Sichtverhältnissen erlaubt, nahe an potenzielle Hindernisse (Bäume, Felsen etc.) heran zu fliegen. Es kann zweckmäßig sein, damit der Kollisionsschutz effizient funktioniert, die Fluggeschwindigkeit zu beschränken. Während der Benutzung des Kollisionsschutzes kann z.B. die maximale Fluggeschwindigkeit auf 5 m/s bzw. auf 3 m/s beschränkt sein. Hierdurch können auch bei schlechten Wetterbedingungen Daten zur Dokumentation des Lawinenabgangs, insbesondere Bilddaten, welche den Lawinenabriss und/oder den Lawinenkegel zeigen, erfasst werden.

Weiterhin kann ein Suchsender, insbesondere ein passiver Suchsender, wie er von der Firma Recco vertrieben wird, an der Schnur und/oder dem Sprengsatz angeordnet sein, um eine nachträgliche Suche zu erleichtern.

Anstelle einer ferngesteuert auslösbaren Abwurfeinrichtung kann auch ein Befestigungsmechanismus installiert sein, der sich ab einem bestimmten Kraftmoment selbstständig löst. Dieses Moment ist größer als das an der Schnur hängende Gewicht, so dass die frei hängende Schnur mit dem Sprengsatz und gegebenenfalls dem Zündmechanismus sicher gehalten werden kann, und kleiner als das maximal von der Drohne ausübbare Kraftmoment, so dass sich bei einem Verhaken des Seiles in einem Baum oder an einem sonstigen Gegenstand selbstständig lösen kann.

Die Vorrichtung weist vorzugsweise eine Höhenmesseinrichtung zum Messen der Höhe gegenüber dem Untergrund auf. Diese Höhenmesseinrichtung kann an der Drohne und/oder an der Schnur angeordnet sein. Die Höhenmesseinrichtung kann beispielsweise ein Laserscanner sein, mit welchem der Abstand zum Untergrund sehr präzise feststellbar ist.

Anhand des mit der Höhenmesseinrichtung bestimmten Höhenwertes kann der Zielort der Drohne automatisch korrigiert werden und der Abstand gegenüber der Schneeoberfläche automatisch justiert werden. Da sich bei Schneefall die Höhe der Schneedecke ändert, kann mittels der Höhenmesseinrichtung der Sprengort an die sich verändernde Dicke der Schneedecke angepasst werden.

Bei einem Verfahren zum Sprengen einer Lawine kann eine oben erläuterte Vorrichtung mit einer Drohne, einem Sprengsatz, welcher mittels einer Schnur frei hängend an der Drohne befestigt ist, und einem Zündmechanismus zum Zünden des Sprengsatzes, verwendet werden. Die Drohne wird zu einem Sprengungsort geflogen, der auch als Zielort bezeichnet werden kann. Hierbei befindet sich der Sprengsatz über einer zu sprengenden Schneedecke und der Zündmechanismus wird entweder ferngesteuert oder automatisch ausgelöst.

Der Zielort wird vorzugsweise so festgelegt, dass sich der Sprengsatz zumindest 0,1 m, insbesondere zumindest 0,5 m, insbesondere zumindest 1 m oder sogar zumindest 2 m oberhalb der Schneedecke befindet. Hierdurch wird vermieden, dass die Sprengung durch den Schnee gedämpft werden würde, wie es der Fall wäre, wenn der Sprengsatz innerhalb der Schneedecke detonieren würde.

Vorzugsweise ist der Zielort so eingerichtet, dass sich der Sprengsatz nicht mehr als 10 m, insbesondere nicht mehr als 8 m und vorzugsweise nicht mehr als 5 m oberhalb der Schneedecke befindet. Je größer der Abstand des Sprengsatzes zur Oberfläche der Schneedecke ist, desto größer ist auch die Reichweite, aber desto kleiner ist der Impuls auf die Schneedecke. Der tatsächliche Abstand des Sprengsatzes ist daher vom Sprengmeister vor Ort auszuwählen.

Die Höhe des Sprengsatzes über dem Untergrund kann beispielsweise dadurch bestimmt werden, dass die Drohne am Zielort so weit abgesenkt wird, bis der Sprengsatz am Untergrund aufsitzt, und mit der Höhenmesseinrichtung die Höhe der Drohne gemessen wird, wenn der Sprengsatz auf dem Untergrund aufsitzt. Die Drohne wird dann um eine vorbestimmte Höhe angehoben, so dass sich der Sprengsatz um diese vorbestimmte Höhe über dem Untergrund befindet. Der Sprengsatz wird in der vorbestimmten Höhe über dem Untergrund gezündet. Hierdurch kann die Höhe des Sprengsatzes über dem Untergrund exakt eingestellt werden.

Das Aufsetzen des Sprengsatzes auf dem Untergrund kann durch Überwachen einer Antriebsleistung, welcher Motoren zum Antreiben von Rotoren der Drohne zugeführt wird, festgestellt werden. Es ist auch möglich, das Aufsetzen des Sprengsatzes auf dem Untergrund mittels einer Waage festzustellen, welche das an der Schnur hängende Gewicht misst.

Die Drohne fliegt den Sprengungsort vorzugsweise selbsttätig an. Der Zielort ist in diesem Fall mittels Ortskoordinaten in der Flugsteuereinrichtung gespeichert. Hierdurch kann auch bei schwierigen Flugverhältnissen der Zielort zuverlässig erreicht werden.

Der Flug der Drohne kann auch ferngesteuert werden. Dies ist vor allem dann zweckmäßig, wenn Zielorte angeflogen werden, deren Ortskoordinaten nicht bekannt sind.

Es können mehrere Vorrichtungen zum Sprengen von Lawinen verwendet werden, welche jeweils eine Drohne, einen Sprengsatz, welcher mittels einer Schnur frei an der Drohne hängend befestigt ist, und einen Zündmechanismus zum Zünden des Sprengsatzes aufweisen, wobei der Zündmechanismus ferngesteuert oder automatisch auslösbar ausgebildet ist. Diese Vorrichtungen werden gleichzeitig verwendet, um einen Bereich mit jeweils einem Sprengsatz anzufliegen, in dem künstlich eine Lawine ausgelöst werden soll. Die Zündmechanismen zum Zünden der Sprengsätze sind zueinander synchronisiert. Diese Synchronisation kann bedeuten, dass alle Zündmechanismen gleichzeitig auslösen, so dass mehrere Sprengsätze gleichzeitig in einem vorbestimmten Gebiet detonieren und eine oder mehrere Lawinen zur Auslösung bringen. Es ist jedoch auch möglich, dass die einzelnen Sprengsätze derart synchronisiert sind, dass sie mit einem zeitlichen Versatz ausgelöst werden. Dieser zeitliche Versatz kann beispielsweise der Zeitdauer entsprechen, welche die Schallwellen einer ersten Sprengung benötigen, um in den Bereich der nächstliegenden zweiten Drohne zu gelangen. Dem entsprechend können die Zündungen der Sprengsätze der weiteren Drohnen, welche von der ersten Drohne noch weiter entfernt sind, verzögert werden, so dass sich entlang der Linie, an welcher die Drohnen angeordnet sind, eine Wellenfront etwa kontinuierlich ausbreitet und immer wieder durch weitere Zündungen verstärkt wird.

Die synchronisierten Zündmechanismen können mit einem einzigen Funksignal ausgelöst werden. Bei gleichzeitiger Zündung lösen alle Zündmechanismen sofort nach Empfang des Funksignals aus. Sollen die Zündmechanismen derart synchronisiert sein, dass die einzelnen Zündungen zeitlich versetzt erfolgen, dann wird mit dem Zündsignal vorzugsweise einer jeden Vorrichtung bzw. einem jeden Zündmechanismus eine Zusatzinformation übermittelt, die den Zeitversatz enthält. Der Zeitversatz kann auch durch Berechnen des Abstandes der Drohnen zueinander bestimmt werden. Hierzu wird der Ort der einzelnen Drohnen erfasst und an die Fernsteuerung 8 übermittelt. An der Fernsteuerung 8 werden die Abstände zwischen den Drohnen 2 und damit die Zeitversätze berechnet.

Die Zeitversätze können auch in den Zündmechanismen 5 voreingestellt sein, so dass alle Zündmechanismen 5 mit einem gemeinsamen Funksignal ausgelöst werden und zeitversetzt zueinander zünden.

Grundsätzlich ist es zweckmäßig zwei Zündmechanismen vorzusehen, welche unabhängig voneinander ausgebildet sind. Es werden vorzugsweise sogenannte HU-Zünder als Zündmechanismen verwendet, welche hoch unempfindlich und Schlagwetter-sicher sind.

Anstelle eines elektrischen Zündmechanismus kann auch ein mechanischer Zündmechanismus vorgesehen sein. Dieser ist beispielsweise ein sogenannter Abrisszünder. Die Schnur ist hierzu aus zwei Abschnitten ausgebildet, wobei beide Abschnitte mit dem Abrisszünder mit jeweils einem Ende verbunden sind und mit jeweils dem anderen Ende an der Drohne befestigt sind. Einer der beiden Abschnitte ist etwas kürzer und bildet einen sogenannten Verlierabschnitt. Dieser Verlierabschnitt besteht vorzugsweise aus einem dünnen Hanfseil, das beim Zünden abgeworfen wird und verrotten kann.

Die aus den beiden Abschnitten bestehende Schnur bildet eine Schlaufe, wobei der Abrisszünder sich etwas oberhalb eines unteren Endbereiches der Schlaufe befindet.

Wird der Verlierabschnitt von der Drohne gelöst, fällt der Abrisszünder ein Stück nach unten, bis der andere Abschnitt der Schnur gestreckt ist. Hierdurch wird die Bewegung des Abrisszünders abrupt gebremst, wodurch der Abrisszünder eine Zündung auslöst.

Mit einem solchen mechanischen Abrisszünder ist es nicht notwendig, dass der Sprengsatz elektrisch gezündet wird. Ein solcher mechanischer Zündmechanismus ist vor allem bei dem beim Lawinensprengen bestehenden Wetterbedingungen (Kälte, Schneefall) sehr zuverlässig.

Die Erfindung wird nachfolgend beispielhaft näher anhand der Zeichnung erläutert. Die Zeichnung zeigt schematisch in:

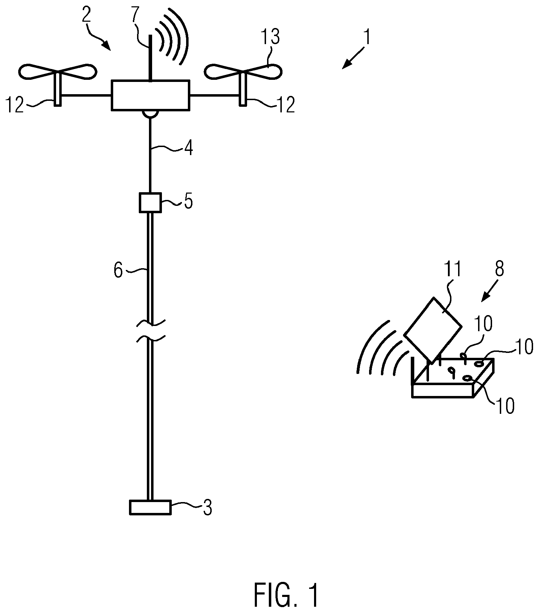

- Figur 1: eine Vorrichtung zum Sprengen einer Lawine in einer Seitenansicht nach einem ersten Ausführungsbeispiel,
- Figur 2: eine Drohne, die Bestandteil dieser Lawinensprengvorrichtung ist, in einem Blockschaltbild,
- Figur 3: eine Vorrichtung zum Sprengen einer Lawine in einer Seitenansicht nach einem zweiten Ausführungsbeispiel,
- Figur 4: eine Vorrichtung zum Sprengen einer Lawine in einer Seitenansicht nach einem zweiten Ausführungsbeispiel, welche etwas abgewandelt ist, und
- Figur 5: eine Vorrichtung zum Sprengen einer Lawine in einer Seitenansicht nach einem dritten Ausführungsbeispiel.

Ein Ausführungsbeispiel einer Vorrichtung zum Sprengen von Lawinen, welche im Folgenden auch kurz als Lawinensprengvorrichtung 1 bezeichnet wird, umfasst eine Drohne 2, einen Sprengsatz 3, welcher mittels einer Schnur 4 frei hängend an der Drohne 2 befestigt ist. Ein Zündmechanismus 5 zum Zünden des Sprengsatzes 3 ist an der Schnur 4 befestigt. Der Zündmechanismus 5 ist mit einem Zündkabel 6 mit dem Sprengsatz 3 verbunden.

Der Zündmechanismus 5 ist zum ferngesteuerten und/oder automatischen Auslösen ausgebildet. Zum ferngesteuerten Auslösen weist der Zündmechanismus 5 einen Funkempfänger (nicht dargestellt) auf, um ein Funksignal zum Zünden des Zündsatzes zu empfangen.

Die Schnur 4 ist beispielsweise eine Reepschnur mit einem Durchmesser von 1 mm bis 3 mm. Sie kann eine Tragkraft von 100 kg bis 300 kg aufweisen.

Vorzugsweise ist der Abschnitt der Schnur zwischen der Drohne 2 und dem Zündmechanismus 5 dicker als der Abschnitt der Schnur zwischen dem Zündmechanismus 5 und dem Sprengsatz 3. Der dickere Abschnitt der Schnur weist bspw. Eine Dicke von zumindest 3 mm und vorzugsweise zumindest 4 mm auf und der dünnere Abschnitt ist vorzugsweise dünner als 3 mm. Dies ist vor allem beim Starten und Landen der Drohne 2 von Vorteil, da der dickere Abschnitt der Schnur 4 nicht so leicht von den von der Drohne erzeugten Luftwirbeln aufgewirbelt wird und sich mit einem Propeller der Drohne verheddern kann.

Der dicke Abschnitt der Schnur 4 ist bspw. 5 m bis 15 m lang und der dünne Abschnitt bspw. 25 m bis 40 m lang. Die Gesamtlänge der Schnur 4 beträgt beim vorliegendem Ausführungsbeispiel ca. 40 m bis 65 m.

Der Sprengsatz 3 kann eine Sprengladung mit einem Gewicht von einigen Kilogramm umfassen. Die Sprengladung kann bis zu 10 kg schwer sein. Typischerweise wird eine Sprengladung mit einem Gewicht von 2 kg bis zu 5 kg eingesetzt.

Die Drohne 2 ist vorzugsweise ein Hexakopter oder ein Oktokopter, wobei alle flugrelevanten Teile redundant vorgesehen sind, so dass bei einem Ausfall eines einzelnen Teils die Drohne 2 sicher weiterfliegen kann.

Die Drohne besitzt eine Antenne 7 zum Senden und Empfangen eines Funksignals. Die Drohne 2 kann mit einer Fernsteuerung 8 angesteuert werden, welche mit einer eigenen Antenne 9 die Funksignale von der Drohne 2 empfangen und entsprechende Funksignale zum Steuern der Drohne 2 aussenden kann. Die Fernsteuerung 8 weist Eingabeelemente 10 zum Eingeben von Steuersignalen auf. Im vorliegenden Ausführungsbeispiel sind die Eingabeelemente 10 zwei Betätigungshebel und einige Tasten. Die Fernsteuerung 8 ist mit einem Bildschirm 11 versehen, an welchem von der Drohne 2 empfangene Signale bildlich darstellbar sind.

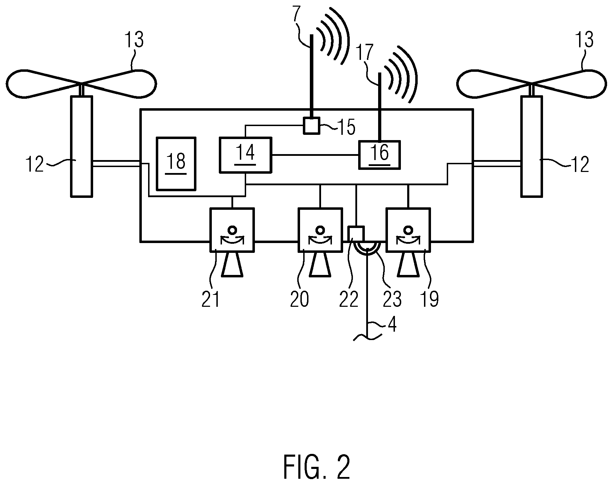

Die Drohne 2 (Figur 2) weist mehrere Motoren 12 zum Antreiben jeweils eines Propellers 13 auf. Im vorliegenden Ausführungsbeispiel ist die Drohne ein Oktokopter mit acht Motoren 12, welche jeweils einen der Propeller 13 antreiben (in den Figuren sind zur einfacheren Darstellung lediglich zwei Motoren und zwei Propeller gezeigt).

Die Drohne 2 ist mit einer zentralen Steuereinrichtung 14 versehen. Die zentrale Steuereinrichtung 14 ist mit einer Sende-/Empfangseinrichtung 15 verbunden, welche zum Senden und Empfangen eines Funksignals über die Antenne 7 ausgebildet ist.

Weiterhin weist die Drohne 2 einen Ortungssensor 16 auf, der im vorliegenden Ausführungsbeispiel ein Satellitensensor, insbesondere GPS-Sensor ist. Der Ortungssensor 16 ist mit einer Antenne 17 zum Empfangen von Satellitensignalen versehen. Grundsätzlich können auch andere Ortungssensoren, wie zum Beispiel welche, die eine Ortung mittels Funk-Telefonsignalen ausführen, verwendet werden. Jedoch empfiehlt sich für den Einsatz im Gebirge ein Ortungssensor, der Satellitensignale empfängt, da diese überall verfügbar sind.

Die Energieversorgung der Drohne 2 wird mittels eines Akkumulators 18 bereitgestellt.

Neben dem Ortungssensor 16 kann die Drohne 2 noch weitere Sensoren umfassen, wie zum Beispiel eine Kamera 19 für sichtbares Licht, eine Kamera für Infrarotstrahlung (= Wärmebildkamera) 20 sowie eine Höhenmesseinrichtung 21. Die Höhenmesseinrichtung 21 kann ein Laserscanner sein, der den Abstand zwischen der Höhenmesseinrichtung 21 und dem nächsten Gegenstand auf einige Zentimeter genau bei einem Gesamtabstand bestimmen kann, der der Länge der Schnur 4 entspricht. Als Höhenmesseinrichtung kann jedoch auch der Ortungssensor verwendet werden. Ein Funkortungssensor ist auch bei schlechten Wetterbedingungen zuverlässig einsetzbar. Die absolute Höhe kann in der Regel mit einem Funkortungssensor nicht mit der Genauigkeit eines Laserscanners gemessen werden, jedoch kann die relative Höhe mit einem Funkortungssensor auch sehr präzise bestimmt werden.

Die Sensoren 19, 20 und 21 sind mit ihrer Blickrichtung bzw. Detektionsrichtung an der Drohne 2 jeweils vertikal nach unten ausgerichtet angeordnet. Die Sensoren 19, 20 und 21 sind vorzugsweise schwenkbar an der Drohne 2 aufgehängt, so dass sie selbsttätig ihre Blickrichtung nach vertikal unten unabhängig von einer Schrägstellung der Drohne 2 beibehalten. Derartige Aufhängungen sind aus dem Bereich der Kameratechnik bekannt.

Die Drohne weist eine Abwurfeinrichtung 22 auf, an welcher die Schnur 4 eingehängt ist. Die Abwurfeinrichtung 22 kann automatisch geöffnet werden, so dass sich die Schnur 4 von der Drohne 2 löst. Im vorliegenden Ausführungsbeispiel umfasst die Abwurfeinrichtung einen Haken, der seitlich weggeschwenkt werden kann, so dass die Schnur vom Haken 23 rutschen kann.

An der zentralen Steuereinrichtung 14 sind mehrere Module vorgesehen, die jeweils durch eine Programmeinheit realisiert sind. Diese Module umfassen
- ein Autopilot-Flugmodul
- ein Fernsteuer-Flugmodul
- ein Kommunikationsmodul.

Das Kommunikationsmodul liest die Sensorsignal des Ortungssensors 16, der Kamera für sichtbares Licht 19, der Wärmebildkamera 20 und/oder der Höhenmesseinrichtung 21 aus und stellt diese Sensorsignale entweder den anderen Modulen zur Verfügung und/oder übermittelt die Sensorsignale mittels der Sende-/Empfangseinrichtung 15 an die Fernsteuerung 8. Die mit den Kameras 19, 20 erzeugten Bildsignale können am Bildschirm 11 dargestellt werden. Die Ortskoordinaten können als Text am Bildschirm 11 gezeigt werden.

Das Autopilot-Flugmodul kann einen Zielort selbsttätig anfliegen, dessen Ortskoordinaten vorab gespeichert sind. Durch einen fortlaufenden Vergleich der mit dem Ortungssensor 16 erfassten Ortskoordinaten und der Zielkoordinaten kann der Zielort automatisch angeflogen werden.

Das Erreichen des Zielortes kann alleine anhand der vom Ortungssensor 16 bereitgestellten Ortskoordinaten erfolgen.

Eine Drohne mit einem Autopilot-Flugmodul kann auch an einem bestimmten Berg in einer Basisstation auf Dauer positioniert sein. Die Basisstation weist ein System zum automatischen Aufladen des Akkumulators der Drohne als auch zum automatischen Bestücken mit einem Sprengsatz auf. Von der Basisstation fliegt die Drohne zu den einzelnen Sprengpunkten, welche vorbestimmt sind oder mittels eines Systems zur Abschätzung der Lawinengefahr bestimmt werden. Ein Sprengvorgang und damit ein Drohnenflug kann von einem Benutzer über die Ferne, z. B. über das Internet oder ein anderes Kommunikationsnetz ausgelöst werden.

Optional ist die Höhenmesseinrichtung 21 vorgesehen, mit welcher die Höhe des Zielortes korrigiert werden kann. Mit der Höhenmesseinrichtung 21 wird der Abstand zwischen der Drohne 2 zum Untergrund unmittelbar vertikal unterhalb der Drohne 2 gemessen. Da sich bei Schneefall die Dicke der Schneeschicht erhöht, kann die Höhe des Untergrundes variieren. Hierdurch kann sich dieser Abstand zum Untergrund zwischen den mittels vorab gespeicherten Ortskoordinaten definierten Zielort zum Untergrund verändern. Falls es jedoch gewünscht ist, dass der Sprengsatz in einer bestimmten Höher über dem Untergrund bzw. über der Oberfläche der Schneedecke bei dessen Zündung angeordnet ist, kann die Höhe des Zielortes mittels der Abstandsmessung durch die Höhenmesseinrichtung 21 während des Fluges der Drohne 2 korrigiert werden und so der Sprengsatz 3 in der exakt gewünschten Höhe über der Oberfläche der Schneedecke bzw. über dem Untergrund angeordnet werden. Dies kann vollständig automatisch mittels dem Autopilot-Flugmodul erfolgen. Bei Erreichen des Zielortes kann, falls es die Gesetzeslage erlaubt, der Sprengsatz 3 automatisch von der zentralen Steuereinrichtung 14 gezündet werden. Hierzu ist ein entsprechendes Zündsignal von der zentralen Steuereinrichtung 14 an den Zündmechanismus 5 zu übermitteln. Dies kann per Funk oder mittels einer kabelgebundenen Übertragung erfolgen.

Der Zündmechanismus kann jedoch auch ferngesteuert ausgelöst werden. Erhält der Zündmechanismus ein Zündsignal, dann wird der Sprengsatz 3 ohne Verzögerung gezündet und explodiert über der Schneedecke, so dass er eine Lawine auslöst.

Das Autopilot-Flugmodul fliegt dann die Drohne 2 automatisch zum Startort, an welchem die Drohne 2 gestartet war, zurück.

Im Rahmen der Erfindung ist es auch möglich, dass das Autopilot-Flugmodul so ausgebildet ist, dass die Drohne vom Startort zum Zielort den potenziellen Lawinenkegel mäanderförmig abfliegt und die Bildsignale der Kameras 19, 20 auf den Bildschirm 11 übertragen werden, so dass der Benutzer dieser Vorrichtung feststellen kann, ob sich Personen oder Tiere im potenziellen Lawinenkegel befinden. Falls dies der Fall sein sollte, kann der Sprengvorgang abgebrochen werden und die Drohne 2 ohne die Sprengung auszuführen, zurückkehren.

Mit dem Fernsteuer-Flugmodul kann ein Benutzer, insbesondere ein Sprengmeister, mittels der Fernsteuerung 8 den Flug der Drohne 2 steuern und die Zündung mittels eines Funksignales von der Fernsteuerung 8 zum Zündmechanismus 5 ferngesteuert auslösen. Auch hier ist es dem Benutzer möglich, zunächst den potenziellen Lawinenkegel zu überfliegen und mit den Kameras 19, 20 abzusuchen, ob sich Personen und/oder Tiere hier befinden.

Zur Sicherung von vorbestimmten Strukturen, wie zum Beispiel Straßen, Dörfern, Skipisten, kann es zweckmäßig sein, die potenziellen Zielorte im Sommer anzufliegen. An der Drohne 2 wird die Schnur 4 mit einem Gewicht befestigt, so dass die Position des Sprengsatzes 3 bezüglich eines jeweiligen Auslöseortes einfach simulierbar ist. Die Schnur 4 kann auch etwas länger als beim Sprengungseinsatz sein, um die Schneedecke zu simulieren. Die Ortskoordinaten dieser Zielorte werden bei dieser Simulation gespeichert, so dass sie beim Vorliegen einer Schneedecke automatisch und zuverlässig angeflogen werden können. Es können grundsätzlich beliebig viele Zielorte gespeichert werden, die dann bei Bedarf entsprechend angeflogen werden. Hierdurch lässt sich eine bestimmte Struktur durch rechtzeitiges Auslösen von Lawinen an vielen unterschiedlichen Stellen zuverlässig schützen. Dies ist auch möglich, wenn die Wetterverhältnisse so schlecht sind, dass ein Hubschrauber nicht fliegen könnte. Durch das Zünden des Sprengsatzes 3 in einer Position mit Abstand zur Oberfläche zur Schneedecke kann an den unterschiedlichen Zielorten wiederholt zuverlässig eine Lawinensprengung ausgeführt werden. Es besteht keine Gefahr, dass der Sprengsatz auf der Schneedecke abrutscht und wo anders explodiert.

Beim Anfliegen des Zielortes mit vorhandener Schneedecke kann durch Vergleich der gespeicherten Ortskoordinaten und der Höhenmessung mittels der Höhenmesseinrichtung 21 die Dicke der Schneedecke gemessen werden. Dies ist eine relevante Information für die Einschätzung der Lawinengefahr. Vorzugsweise sind die Ortskoordinaten zur Beschreibung eines Berghanges in der Steuereinrichtung 14 und/oder in der Fernsteuerung 8 hinterlegt, so dass durch einen Vergleich der aktuellen Ortskoordinaten der Drohne 2 und der gleichzeitig erfassten Höhenwerte ein Profil der Dicke der Schneedecke bestimmt werden kann. Eine solche Schneedeckenmessung kann auch unabhängig von einer Lawinensprengung zur Abschätzung der Lawinengefahr ausgeführt werden. Führt man eine solche Schneedeckenmessung wiederholt in zeitlichem Abstand aus, so kann man die Dicken der einzelnen Schneeschichten bestimmen. Verknüpft man diese Daten mit den entsprechenden Wetterdaten, insbesondere der Temperatur und des Windes beim jeweiligen Schneefall, dann kann man eine sehr genaue Abschätzung der Lawinengefahr erhalten. Dies kann man auch automatisch mit einem selbstlernendem System, insbesondere neuronalen Netzwerk, ausführen, das man zur Abschätzung der Lawinengefahr für bestimmte Gebiete anlernen kann.

Das Anlernen des selbstlernenden Systems erfolgt, indem man die Dickenwerte der Schneedecke und entsprechende Lawinenereignisse an diesem Hang dem selbstlernenden System in einer Lernphase zuführt. Vorzugsweise werden auch die entsprechenden am Hang herrschenden Wetterdaten zugeführt. Nach der Lernphase kann dann das selbstlernende System anhand der Dickenwerte der Schneedecke und ggfs. der Wetterdaten die Lawinengefahr abschätzen. Hierdurch kann eine für einen Hang individuelle Abschätzung der Lawinengefahr erfolgen, welche auf einer großen Datenbasis beruhen kann und so wesentlich zuverlässiger ist, als herkömmliche Verfahren zur Abschätzung der Lawinengefahr ist.

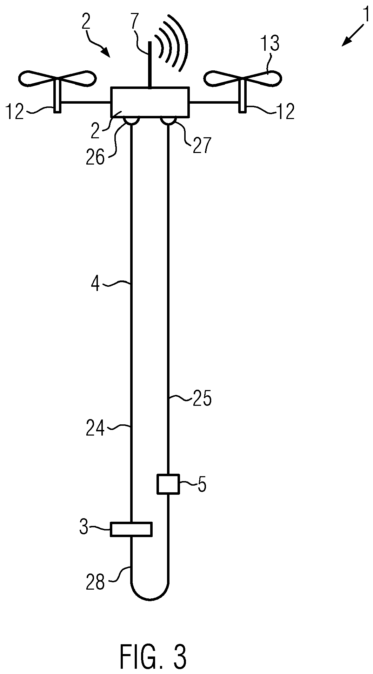

Nachfolgend wird ein zweites Ausführungsbeispiel der Vorrichtung 1 zum Sprengen von Lawinen erläutert (Figur 3). Das zweite Ausführungsbeispiel weist wiederum eine Drohne 2, einen Sprengsatz 3, welcher mittels einer Schnur 4 freihängend an der Drohne befestigt ist, und einen Zündmechanismus 5 zum Zünden des Sprengsatzes 3 auf. Beim zweiten Ausführungsbeispiel sind gleiche Teile mit gleichen Bezugszeichen wie beim ersten Ausführungsbeispiel bezeichnet. Die oben angegebenen Erläuterungen zu den einzelnen Komponenten der Vorrichtung zum Sprengen von Lawinen gelten gleichermaßen für das zweite Ausführungsbeispiel, sofern nachfolgend nichts anderes angegeben ist.

Die Schnur 4 ist bei diesem Ausführungsbeispiel aus zwei Abschnitten, einem Permanentabschnitt 24 und einem Verlierabschnitt 25 ausgebildet. Der Zündmechanismus 5 ist ein mechanischer Zündmechanismus, welcher als Abreißzünder ausgebildet ist. Der Zündmechanismus 5 ist mit dem Verlierabschnitt 25 an der Drohne 2 aufgehängt. Der Sprengsatz 3 hängt mittels des Permanentabschnitts 24 an der Drohne 2. Der Sprengsatz 3 und der Zündmechanismus 5 sind mit einer Zündschnur 28 verbunden, welche die beiden Abschnitte 24, 25 der Schnur 4 zu einer Schlaufe verbindet, die ein Stück unterhalb des Zündmechanismus 5 und dem Sprengsatz 3 durchhängt. Die Abschnitte 24, 25 der Schnur 4 sind jeweils mit einer Klinke 26, 27 an der Drohne 2 befestigt.

Der Verlierabschnitt 25 der Schnur 4 ist ein dünnes Hanfseil, das beim Auslösen des Zündmechanismus 5 durch Lösen der Klinke 27 von der Drohne 2 getrennt und abgeworfen wird. Hierdurch fällt der Zündmechanismus 5 ein Stück nach unten, bis die Zündschnur 28 gestreckt ist. Ein Teil des Zündmechanismus, der mit dem Verlierabschnitt 25 verbunden ist, trennt sich vom anderen Teil des Zündmechanismus 5 und wird zusammen mit dem Verlierabschnitt 25 geopfert. Hierbei wird die Zündung mechanisch ausgelöst und der Sprengsatz 3 über die Zündschnur 28 zur Sprengung gebracht. Wie es einen Fachmann bekannt ist, zündet die Zündschnur nicht direkt sondern mittels eines Zünders (nicht dargestellt) der am Sprengsatz angeordnet ist.

Der Verlierabschnitt ist ein Hanfseil, das geopfert wird. Das Hanfseil verrottet, ohne die Umwelt zu belasten.

Dieser mechanische Zündmechanismus 5 ist sehr einfach und zuverlässig aufgebaut und kann selbst bei ungünstigen Witterungsbedingungen zuverlässig eingesetzt werden.

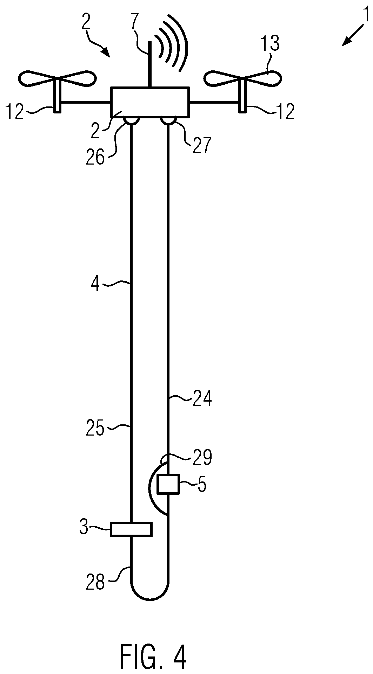

Gemäß einer Abwandlung des zweiten Ausführungsbeispiels (Fig. 4) ist der Zündmechanismus 5 ist mit dem Permanentabschnitt 24 an der Drohne 2 aufgehängt und der Sprengsatz 3 mittels dem Verlierabschnitt 25. Der Permanentabschnitt 24 und die Zündschnur 28 sind mit einer Bypaßschlaufe 29 parallel zum Zünder 5 verbunden.

Zum Auslösen der Sprengung wird die Klinke 26 gelöst, so dass der Verlierabschnitt sich von der Drohne 2 trennt und der Sprengsatz 3 ein Stück nach unten fällt, bis die Zündschnur gestreckt ist. Hierdurch trennt sich ein Teil des Zündmechanismus, der mit dem Verlierabschnitt 25 verbunden ist, vom anderen Teil des Zündmechanismus 5, wodurch der Zündmechanismus ausgelöst wird. Über die Bypaßschlaufe 29 werden die Zündschnur 28 und der Permanentabschnitt 24 zusammen gehalten. Der Sprengsatz 3 wird über die Zündschnur 28 zur Sprengung gebracht.

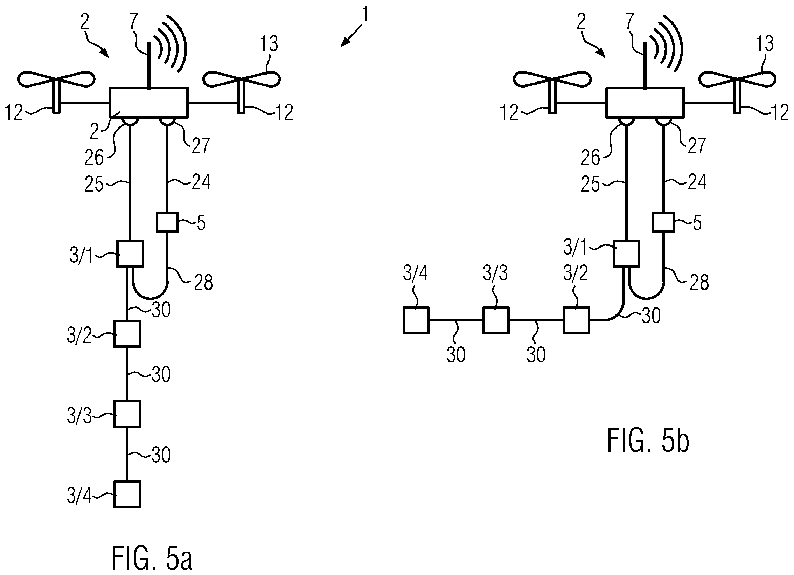

Ein drittes Ausführungsbeispiel ist ausgebildet, um eine Abrisskante in einer Schneedecke durch Verteilen mehrerer Sprengsätze 3/1 - 3/4 quer zu einem Hang erzeugen (Fig. 5a bis 5b). Dieses dritte Ausführungsbeispiel entspricht im Wesentlichen dem zweiten Ausführungsbeispiel wie es in Fig. 4 gezeigt ist, wobei hier lediglich die Bypaßschlaufe 29 weggelassen ist. Weiterhin sind anstelle eines einzigen Sprengsatzes 3 mehrere Sprengsätze 3/1 - 3/4 vorgesehen, die jeweils mittels einer Sprengschnur 30 miteinander verbunden sind. Die Sprengschnur 30 unterscheidet sich von der Zündschnur 28 dadurch, dass die Zündflamme hier wesentlich schneller fortschreitet. Übliche Sprengschnüre, wie sie beispielsweise eine, die unter dem Markennamen Detonex bekannt ist, besitzen eine Ausbreitungsgeschwindigkeit der Zündflamme von 6000 m/s. Hierdurch detonieren die mit der Sprengschnur verbundenen Sprengsätze quasi zeitgleich. Mit der Zündschnur 28 können zwischen der Auslösung des Zündmechanismus 5 und der Sprengungen eine vorbestimmte Zeitdauer von einigen Sekunden bis einigen 10 Sekunden eingestellt werden.

Dadurch, dass keine Bypaßschlaufe 29 vorgesehen ist, wird beim Lösen der Klinke 26 nicht nur der Verlierabschnitt 25 von der Drohne 2 gelöst, sondern beim Auslösen des Zündmechanismus 5 wird dieser in zwei Teile getrennt, so dass alle Sprengsätze 3/1 - 3/4 und die Zündschnur 28 von der Drohne bzw. dem Permanentabschnitt 24 der Schnur 4 getrennt werden.

Die Sprengsätze 3/1 - 3/4 können quer zu einem Hang entlang einer Linie gelegt werden, wobei zunächst der unterste Sprengsatz 3/4 auf dem Untergrund abgelegt wird und die darüber angeordneten Sprengsätze 3/3 - 3/1 aufeinanderfolgend abgelegt werden. Diese Sprengsätze bilden eine sogenannte Schneidladung, um eine Abrisskante in die Schneedecke zu schneiden. Beim Auslösen des Sprengsatzes 5 und damit dem vollständigen Abwerfen der Sprengsätze 3/1 - 3/4 wird zunächst die Zündschnur 28 gezündet, welche zu einer Detonation der Sprengsätze 3/1 - 3/4 führen.

Mit einer solchen Schneidladung können sehr effizient Lawinen in einem breiten Hang und Schneewechten gesprengt werden.

Eine solche Vorrichtung 1 zum Sprengen von Lawinen kann anstelle eines mechanischen Zündmechanismus 5 auch einen elektrischen Zündmechanismus aufweisen, wobei dann jedoch eine Trenneinrichtung zum Trennen der Sprengsätze von der Drohne vorzusehen ist. Vorzugsweise ist die Trenneinrichtung im Bereich unterhalb des Zündmechanismus 5 vorgesehen, so dass dieser bei einer Drohne verbleibt und erneut verwendet werden kann.

Da mit der vorliegenden Vorrichtung und mit dem vorliegenden Verfahren weder feste Installationen noch der Einsatz eines Hubschraubers notwendig sind, sind der technische Aufwand und damit auch die anfallenden Kosten wesentlich geringer als bei den herkömmlichen Vorrichtungen zum Sprengen von Lawinen.

Eine der wesentlichsten Vorteile der erfindungsgemäßen Vorrichtung und des erfindungsgemäßen Verfahrens sind, dass Lawinen auch in Situationen ausgelöst werden können, bei welchen dies bisher nicht möglich war. Solche Situationen liegen vor allem dann vor, wenn es mehrere Tage, insbesondere über mehrere Wochen hinweg kontinuierlich schneit. Diese Situationen treten nicht oft auf, sind jedoch die mit dem größten Gefährdungspotenzial, wobei bei bestimmten Windverhältnissen sehr spezielle Lawinengefahren entstehen können, mit welchen vorab niemand gerechnet hat.

### Bezugszeichenliste

1 Lawinensprengvorrichtung
2 Drohne
3 Sprengsatz
4 Schnur
5 Zündmechanismus
6 Zündhebel
7 Antenne
8 Fernsteuerung
9 Antenne
10 Eingabeelement
11 Bildschirm
12 Motor
13 Propeller
14 Zentrale Steuereinrichtung
15 Sende-/Empfangseinrichtung
16 Ortungssensor
17 Antenne
18 Akkumulator (Kurz: Akku)
19 Kamera für sichtbares Licht
20 Kamera für Infrarotstrahlen
21 Höhenmesseinrichtung
22 Abwurfeinrichtung
23 Haken
24 Permanentabschnitt
25 Verlierabschnitt
26 Klinke
27 Klinke
28 Zündschnur
29 Bypaßschlaufe
30 Sprengschnur

## Patentansprüche

1. Vorrichtung (1) zum Sprengen von Lawinen umfassend
eine Drohne (2), einen Sprengsatz (3), welcher mittels einer Schnur (4) frei hängend an der Drohne (2) befestigt ist, und einen Zündmechanismus (5) zum Zünden des Sprengsatzes (3), wobei der Zündmechanismus (5) ferngesteuert oder automatisch auslösbar ausgebildet ist
**dadurch gekennzeichnet,**
**dass** der Zündmechanismus (5) an der Schnur (4) mit Abstand zur Drohne (2) und mit Abstand zum Sprengsatz (3) so angeordnet ist, dass der Zündmechanismus (5) einerseits nicht durch elektrische Elemente der Drohne (2) fehlgezündet werden kann und andererseits nicht bei einer Sprengung des Sprengsatzes (3) beschädigt wird.

2. Vorrichtung (1) nach Anspruch 1,
**dadurch gekennzeichnet,**
**dass** der Abstand zwischen der Drohne (2) und dem Zündmechanismus (5) zumindest 5 m und vorzugsweise zumindest 10 m beträgt
und/oder
der Abstand zwischen dem Zündmechanismus (5) und dem Sprengsatz (3) zumindest 5 m, insbesondere zumindest 10 m und vorzugsweise zumindest 15 m beträgt.

3. Vorrichtung (1) nach Anspruch 1 oder 2,
**dadurch gekennzeichnet,**
**dass** die Schnur (4) einen Sprengabschnitt aufweist, welcher unmittelbar mit dem Sprengsatz (3) und mit der übrigen Schnur (4) mittels einer lösbaren Klemme verbunden ist.

4. Vorrichtung (1) nach einem der Ansprüche 1 bis 3,
**dadurch gekennzeichnet,**
**dass** die Vorrichtung (1) eine Einrichtung zum Detektieren, ob der Sprengsatz (3) auf einem Untergrund aufsitzt und eine Höhenmesseinrichtung (21) zum Messen der Höhe der Drohne (2), umfasst.

5. Vorrichtung (1) nach Anspruch 4,
**dadurch gekennzeichnet,**
**dass** die Höhenmesseinrichtung (21) mittels Funksignale die Höhe bzw. den Ort der Drohne (2) in einem dreidimensionalen Koordinatensystem bestimmt
und/oder
die Höhenmesseinrichtung (21) vorgesehen ist, um den Abstand zum Untergrund zu messen.

6. Vorrichtung (1) nach einem der Ansprüche 1 bis 5,
**dadurch gekennzeichnet,**
**dass** die Schnur (4) zumindest 10 m und vorzugsweise zumindest 20 m lang ist, wobei ein Ende der Schnur (4) an der Drohne (2) befestigt ist und das andere Ende der Schnur (4) mit dem Sprengsatz (3) verbunden ist,
und/oder
die Schnur (4) an der Drohne (2) mittels einer Abwurfeinrichtung (22) befestigt ist, welche ferngesteuert auslösbar ausgebildet ist.

7. Vorrichtung (1) nach einem der Ansprüche 1 bis 6,
**dadurch gekennzeichnet,**
**dass** die Vorrichtung (1) einen Ortungssensor (16) aufweist
und/oder
die Vorrichtung (1) eine Kamera (19) für sichtbares Licht und/oder eine Kamera (20) für Infrarotstrahlung aufweist
und/oder
eine Funkeinrichtung (15) zum Übertragen von Sensorsignalen und/oder Bildsignalen vorgesehen ist.

8. Vorrichtung (1) nach Anspruch 7,
**dadurch gekennzeichnet,**
**dass** die Vorrichtung (1) eine Steuereinrichtung (14) aufweist, mit welcher nach Maßgabe von mit dem Ortungssensor (16) ermittelten Ortskoordinaten die Vorrichtung (1) selbsttätig an einen bestimmten Zielort fliegen kann.

9. Verfahren zum Sprengen einer Lawine, wobei eine Vorrichtung (1) nach einem der Ansprüche 1 bis 8 verwendet wird, und die Drohne (2) an einem Zielort geflogen wird, so dass sich der Sprengsatz (3) über einer zu sprengenden Schneedecke befindet und der Zündmechanismus (5) ferngesteuert oder automatisch ausgelöst wird.

10. Verfahren nach Anspruch 9,
**dadurch gekennzeichnet,**
**dass** die Drohne (2) den Zielort selbsttätig anfliegt
und/oder
der Flug der Drohne (2) ferngesteuert wird.

11. Verfahren nach Anspruch 9 oder 10,
**dadurch gekennzeichnet,**
**dass** eine Vorrichtung (1) nach Anspruch 5 und insbesondere eine Vorrichtung (1) nach Anspruch 6 verwendet wird, wobei
die Drohne (2) am Zielort so weit abgesenkt wird, bis der Sprengsatz (3) am Untergrund aufsitzt und mit der Höhenmesseinrichtung (21) die Höhe der Drohne (2) gemessen wird, wenn der Sprengsatz (3) auf dem Untergrund aufsitzt, die Drohne (2) dann um eine vorbestimmte Höhe angehoben wird, so dass sich der Sprengsatz (3) um diese vorbestimmte Höhe über dem Untergrund befindet, und
der Sprengsatz (3) in der vorbestimmten Höhe über dem Untergrund gezündet wird.

12. Verfahren nach Anspruch 11,
**dadurch gekennzeichnet,**
**dass** das Aufsetzen des Sprengsatzes (3) auf dem Untergrund durch Überwachen einer Antriebsleistung, welche Motoren (12) zum Antreiben von Rotoren (13) der Drohne (2) zugeführt wird, oder mittels einer Waage, welche das an der Schnur (4) hängende Gewicht misst, festgestellt wird.

13. Verfahren nach einem der Ansprüche 9 bis 12,
**dadurch gekennzeichnet,**
**dass** mit der Drohne (2) ein mit einer Schneedecke bedeckter Hang überflogen wird und mit der an der Drohne (2) vorgesehenen Höhenmesseinrichtung (21) der Abstand zwischen der Höhenmesseinrichtung (21) und der Oberfläche der Schneedecke gemessen wird und gleichzeitig mit dem Ortungssensor (16) der Ort der Höhenmesseinrichtung (21) bzw. der Drohne (2) erfasst wird und anhand dieser Messdaten durch einen Vergleich mit Daten, welche die Oberfläche des Hanges ohne Schneedecke beschreiben, die Dicke der Schneedecke und insbesondere ein Dickenprofil bestimmt wird.

14. Verfahren nach Anspruch 13,
**dadurch gekennzeichnet,**
**dass** die Messdaten einem selbstlernendem System zugeführt werden, so dass anhand dieser Messdaten die Gefahr eines Lawinenabganges abgeschätzt wird.

15. Verfahren nach einem der Ansprüche 9 bis 14,
**dadurch gekennzeichnet,**
**dass** mehrere Vorrichtungen (1) zum Sprengen von Lawinen umfassend jeweils eine Drohne (2), einen Sprengsatz (3), welcher mittels einer Schnur (4) frei hängend an der Drohne (2) befestigt ist, und einen Zündmechanismus (5) zum Zünden des Sprengsatzes (3), wobei der Zündmechanismus (5) ferngesteuert oder automatisch auslösbar ausgebildet ist, gleichzeitig verwendet werden, wobei Zündmechanismen (5) synchronisiert zueinander zum Zünden der Sprengsätze (3) ausgelöst werden, wobei die Vorrichtungen (1) vorzugsweise nach einem der Ansprüche 1 bis 9 ausgebildet sind.

## Claims

1. A device (1) for avalanche blasting, comprising
a drone (2), an explosive charge (3) which is attached to the drone (2) so as to hang freely by means of a cord (4), and a firing mechanism (5) for firing the explosive charge (3), the firing mechanism (5) being designed to be triggered remotely or automatically,
**characterized in that**
the firing mechanism (5) is arranged on the cord (4) at a distance from the drone (2) and at a distance from the explosive charge (3) such that the firing mechanism (5) cannot be misfired by electrical elements of the drone (2), on the one hand, and is not damaged when the explosive charge (3) is detonated, on the other hand.

2. The device (1) according to claim 1,
**characterized in that**
the distance between the drone (2) and the firing mechanism (5) is at least 5 m and preferably at least 10 m
and/or
the distance between the firing mechanism (5) and the explosive charge (3) is at least 5 m, in particular at least 10 m and preferably at least 15 m.

3. The device (1) according to claim 1 or 2,
**characterized in that**
the cord (4) comprises an explosive section which is directly connected to the explosive charge (3) and to the remaining cord (4) by means of a releasable clamp.

4. The device (1) according to any one of claims 1 to 3,
**characterized in that**
the device (1) comprises an equipment for detecting whether the explosive charge (3) touches down on a ground and an altitude measuring equipment (21) for measuring the altitude of the drone (2).

5. The device (1) according to claim 4,
**characterized in that**
the altitude measuring equipment (21) determines the altitude and/or the location of the drone (2) in a three-dimensional coordinate system by means of radio signals
and/or
the altitude measuring equipment (21) is provided to measure the distance to the ground.

6. The device (1) according to any one of claims 1 to 5,
**characterized in that**
the cord (4) has a length of at least 10 m and preferably at least 20 m, one end of the cord (4) being attached to the drone (2) and the other end of the cord (4) being connected to the explosive charge (3),
and/or
the cord (4) is attached to the drone (2) by means of a drop device (22) which is designed to be triggered by remote control.

7. The device (1) according to any one of claims 1 to 6,
**characterized in that**
the device (1) comprises a location sensor (16)
and/or
the device (1) comprises a camera (19) for visible light and/or a camera (20) for infrared radiation
and/or
a radio equipment (15) is provided for transmitting sensor signals and/or image signals.

8. The device (1) according to claim 7,
**characterized in that**
the device (1) comprises a control equipment (14) by means of which the device (1) can fly automatically to a specific target location based on location coordinates determined by the location sensor (16).

9. A method for avalanche blasting, wherein a device (1) according to any one of claims 1 to 8 is used and the drone (2) is flown to a target location such that the explosive charge (3) is located above a snow cover to be detonated and the firing mechanism (5) is triggered by remote control or automatically.

10. The method according to claim 9,
**characterized in that**
the drone (2) flies to the target location automatically
and/or
the flight of the drone (2) is controlled remotely.

11. The method according to claim 9 or 10,
**characterized in that**
a device (1) according to claim 5 and in particular a device (1) according to claim 6 is used, wherein
the drone (2) is lowered at the target location so far until the explosive charge (3) touches down on the ground and the altitude measuring equipment (21) measures the altitude of the drone (2) when the explosive charge (3) is placed on the ground, the drone (2) is then raised by a predetermined height so that the explosive charge (3) is located above the ground by this predetermined height, and
the explosive charge (3) is detonated at the predetermined height above the ground.

12. The method according to claim 11,
**characterized in that**
the touchdown of the explosive charge (3) on the ground is determined by monitoring a drive power supplied to motors (12) for driving rotors (13) of the drone (2), or by means of a scale which measures the weight hanging on the cord (4).

13. The method according to any one of claims 9 to 12,
**characterized in that**
the drone (2) is used to fly over a slope covered with a snow cover and the distance between the altitude measuring equipment (21) and the surface of the snow cover is measured using the altitude measuring equipment (21) provided on the drone (2) and, at the same time, the location of the altitude measuring equipment (21) or the drone (2) is detected using the location sensor (16) and, on the basis of this measurement data, the thickness of the snow cover and in particular a thickness profile is determined by means of a comparison with data describing the surface of the slope without snow cover.

14. The method according to claim 13,
**characterized in that**
the measurement data is supplied to a self-learning system so that the risk of an avalanche is estimated on the basis of this measurement data.

15. The method according to any one of claims 9 to 14,
**characterized in that**
several devices (1) for avalanche blasting, each comprising a drone (2), an explosive charge (3) which is attached to the drone (2) so as to hang freely by means of a cord (4), and a firing mechanism (5) for igniting the explosive charge (3), the firing mechanism (5) being designed to be triggered remotely or automatically, are used simultaneously, and the firing mechanisms (5) are triggered synchronously with one another to fire the explosive charges (3), the devices (1) preferably being designed according to any one of claims 1 to 9.

## Revendications

1. Dispositif (1) pour faire exploser des avalanches, comprenant
un drone (2), une charge explosive (3) qui est fixée au drone (2) en suspension libre au moyen d'un cordon (4), et un mécanisme de mise à feu (5) pour la mise à feu de la charge explosive (3), le mécanisme de mise à feu (5) étant adapté pour être déclenché de manière télécommandé ou automatiquement,
**caractérisé en ce que**
le mécanisme de mise à feu (5) est disposé sur le cordon (4) à distance du drone (2) et à distance de la charge explosive (3) de telle sorte que le mécanisme de mise à feu (5), d'une part, ne puisse pas être mis à feu accidentellement par des éléments électriques du drone (2) et, d'autre part, ne soit pas endommagé lors d'une explosion de la charge explosive (3).

2. Le dispositif (1) selon la revendication 1,
**caractérisé en ce que**
la distance entre le drone (2) et le mécanisme de mise à feu (5) est d'au moins 5 m et de préférence d'au moins 10 m
et/ou
la distance entre le mécanisme de mise à feu (5) et la charge explosive (3) est d'au moins 5 m, notamment d'au moins 10 m et de préférence d'au moins 15 m.

3. Le dispositif (1) selon la revendication 1 ou 2,
**caractérisé en ce que**
le cordon (4) comprend une section explosive qui est directement reliée à la charge explosive (3) et au reste du cordon (4) au moyen d'une pince détachable.

4. Le dispositif (1) selon l'une des revendications 1 à 3,
**caractérisé en ce que**
le dispositif (1) comprend des moyens pour détecter si la charge explosive (3) est posée au sol et un dispositif de mesure d'altitude (21) pour mesurer l'altitude du drone (2).

5. Le dispositif (1) selon la revendication 4,
**caractérisé en ce que**
le dispositif de mesure d'altitude (21) détermine, au moyen de signaux radio, l'altitude et la position du drone (2) dans un système de coordonnées tridimensionnel
et/ou
le dispositif de mesure d'altitude (21) est prévu pour mesurer la distance par rapport au sol.

6. Le dispositif (1) selon l'une des revendications 1 à 5,
**caractérisé en ce que**
le cordon (4) a une longueur d'au moins 10 m et de préférence d'au moins 20 m, une extrémité du cordon (4) étant fixée au drone (2) et l'autre extrémité du cordon (4) étant reliée à la charge explosive (3),
et/ou
le cordon (4) est fixé au drone (2) au moyen d'un dispositif de largage (22) qui est adapté pour être déclenché de manière télécommandé.

7. Le dispositif (1) selon l'une des revendications 1 à 6,
**caractérisé en ce que**
le dispositif (1) comprend un capteur de localisation (16)
et/ou
le dispositif (1) comprend une caméra (19) pour la lumière visible et/ou une caméra (20) pour le rayonnement infrarouge
et/ou
un dispositif radio (15) est prévu pour transmettre des signaux de capteur et/ou des signaux d'image.

8. Le dispositif (1) selon la revendication 7,
**caractérisé en ce que**
le dispositif (1) comprend un dispositif de commande (14) avec lequel le dispositif (1) peut voler automatiquement vers un lieu de destination déterminé en fonction des coordonnées de lieu déterminées par le capteur de localisation (16).

9. Procédé pour faire exploser des avalanches, sachant qu'on utilise un dispositif (1) selon l'une des revendications 1 à 8, et qu'on fait voler le drone (2) vers le lieu de destination de sorte que la charge explosive (3) se trouve au-dessus d'une couche de neige à faire exploser et que le mécanisme de mise à feu (5) soit déclenché de manière télécommandé ou automatiquement.

10. Le procédé selon la revendication 9,
**caractérisé en ce que**
le drone (2) se dirige automatiquement vers le lieu de destination
et/ou
le vol du drone (2) est télécommandé.

11. Le procédé selon la revendication 9 ou 10,
**caractérisé en ce que**
on utilise un dispositif (1) selon la revendication 5 et notamment un dispositif (1) selon la revendication 6, sachant que
on abaisse le drone (2) au lieu de destination jusqu'à ce que la charge explosive (3) soit en appui sur le sol et on mesure l'altitude du drone (2) à l'aide du dispositif de mesure d'altitude (21) lorsque la charge explosive (3) est en appui sur le sol, on relève alors le drone (2) d'une hauteur prédéterminée de manière à ce que la charge explosive (3) se trouve à cette hauteur prédéterminée au-dessus du sol, et
la charge explosive (3) est mise à feu à ladite hauteur prédéterminée au-dessus du sol.

12. Le procédé selon la revendication 11,
**caractérisé en ce que**
la pose de la charge explosive (3) sur le sol est détectée en surveillant une puissance motrice fournie à des moteurs (12) d'entraînement de rotors (13) du drone (2) ou au moyen d'une balance mesurant le poids suspendu au cordon (4).

13. Le procédé selon l'une quelconque des revendications 9 à 12,
**caractérisé en ce que**
on survole avec le drone (2) une pente recouverte d'une couche de neige et on mesure, avec le dispositif de mesure d'altitude (21) prévu sur le drone (2), la distance entre le dispositif de mesure d'altitude (21) et la surface de la couche de neige et on détecte simultanément, avec le capteur de localisation (16), l'emplacement du dispositif de mesure d'altitude (21) ou du drone (2) et on détermine à l'aide de ces données de mesure l'épaisseur de la couche de neige et en particulier un profil d'épaisseur en les comparant avec des données qui décrivent la surface de la pente sans couche de neige.

14. Le procédé selon la revendication 13,
**caractérisé en ce que**
les données de mesure sont transmises à un système d'auto-apprentissage, de sorte que le risque d'avalanche est estimé à l'aide de ces données de mesure.

15. Le procédé selon l'une des revendications 9 à 14,
**caractérisé en ce que**
plusieurs dispositifs (1) pour faire exploser des avalanches, comprenant chacun un drone (2), une charge explosive (3) qui est fixée au drone (2) en suspension libre au moyen d'un cordon (4), et un mécanisme de mise à feu (5) pour allumer la charge explosive (3), le mécanisme de mise à feu (5) étant adapté pour être déclenché de manière télécommandé ou automatiquement, sont utilisés simultanément, les mécanismes de mise à feu (5) étant déclenchés de manière synchronisée les uns par rapport aux autres pour la mise à feu des charges explosives (3), les dispositifs (1) étant de préférence conçus selon l'une des revendications 1 à 9.
